# EUROPÄISCHE PATENTSCHRIFT

(11) **EP 2 315 714 B1**
(45) Veröffentlichungstag und Bekanntmachung des Hinweises auf die Patenterteilung: **17.10.2012**
(21) Anmeldenummer: 09777437.6
(22) Anmeldetag: 25.07.2009
(51) Int. Cl.: B65G 1/137

(54) **VORRICHTUNG ZUM VOLLAUTOMATISIERTEN KOMMISSIONIEREN VON ARTIKELN IN AUFTRAGSLADEHILFSMITTEL**
DEVICE FOR FULLY AUTOMATED COMMISSIONING OF ARTICLES IN ORDER BEARING MEANS
DISPOSITIF ENTIÈREMENT AUTOMATIQUE DE PRÉPARATION D'ARTICLES DANS DES CONTENANTS DE COMMANDES

(30) Priorität: 29.08.2008 DE 102008046325
(43) Veröffentlichungstag der Anmeldung: 04.05.2011
(73) Patentinhaber: SSI Schäfer Peem GmbH, 8051 Graz (AT)
(72) Erfinder: WINKLER, Max, A-8010 Graz (AT); SUESS, Heiko, A-8044 Graz (AT); SCHLAGBAUER, Markus, A-8020 Graz (AT)
(74) Vertreter: Witte, Weller & Partner
(86) Internationale Anmeldenummer: PCT/EP2009/005400
(87) Internationale Veröffentlichungsnummer: WO 2010/022832

(56) Entgegenhaltungen:
- EP-A- 0 949 169
- EP-A- 1 260 436
- DE-A1- 2 062 845
- DE-A1- 10 119 679
- US-A- 4 641 271
- US-A- 4 679 149
- US-A- 5 040 056
- US-A- 5 281 081
- US-A- 6 011 998
- US-A- 6 122 895
- US-A1- 2002 067 984
- US-B1- 7 266 422

## Beschreibung

Die vorliegende Erfindung betrifft ein System zum vollautomatisierten, mannlosen Kommissionieren von Artikeln, die vorzugsweise in Lagerladehilfsmitteln bevorratet sind, hinein in Auftragsladehilfsmittel, und zwar gemäß einem Kommissionierauftrag.

In der heutigen Zeit gibt es im Wesentlichen zwei Kommissionierstrategien, die durch eine technisch-organisatorische Ausstattung bedingt sind. Bei der ersten Strategie wird nach dem "Mann-zur-Ware"-Prinzip gearbeitet. Bei der zweiten Strategie wird nach dem "Ware-zum-Mann"-Prinzip gearbeitet. Je nach Strategie wird eine zeitlich-räumliche Abarbeitung von Kommissionieraufträgen festgelegt. Ein Kommissionierauftrag umfasst mehrere Positionen (Zeilen) mit verschiedenen Artikeln in unterschiedlichen Anzahlen.

Bei einem großen Artikelsortiment, das eine Vielzahl von verschiedenen Artikeltypen umfasst, wird üblicherweise nach dem "Ware-zum-Mann"-Prinzip. Dabei werden z.B. Lagerbehälter aus einem Behälterlager zu einem Kommissionierplatz gefördert, wo eine Kommissionierperson die Artikel händisch aus den Lagerbehältern entnimmt und sie in Auftragsbehälter gibt, die im Bereich des Kommissionierplatzes angeordnet sind. Ein Materialfluss- bzw. Lagerverwaltungsrechner weist den Auftragsbehältern jeweils einen Kommissionierauftrag zu und sorgt dafür, dass die richtigen Lagerbehälter, die die für den jeweiligen Kommissionierauftrag benötigten Artikel enthalten, zu dem Kommissionierplatz gefördert werden, wo der dazu gehörige Auftragsbehälter abgearbeitet wird.

Wenn das Artikelsortiment nicht allzu groß ist und wenn die zu kommissionierenden Artikel gut stapelbar und in hohen Anzahlen abgerufen werden, werden üblicherweise sogenannte A-Frames bzw. Kommissionierautomaten eingesetzt. Ein exemplarischer A-Frame ist in dem Dokument US 5,755,552 offenbart. Ein A-Frame ist ein Kommissionierautomat, bei dem über Schächte, in denen die Artikel übereinander gestapelt sind, diese Artikel auf ein zentrales Förderband abgegeben werden, welches mittig zwischen den A-förmigen Schenkeln des Automatengestells angeordnet ist. Man spricht in diesem Zusammenhang auch von Schachtkommissionierern. Schachtkommissionierer werden insbesondere für kleinere, stabil verpackte Einheiten, z.B. im Pharmabereich, eingesetzt. Durch den üblicherweise parallelen Betrieb können mehrere Schachtkommissionierer mit einem gemeinsamen abfördernden Band sehr hohe Leistungen (bis mehrere 10.000 Stück pro Stunde) erreichen. Die Schächte sind dazu in Längsrichtung des Bands hintereinander angeordnet und zur Aufnahme unterschiedlicher Artikeltypen ausgebildet. Am unteren Ende eines jeden Schachts ist ein sogenannter Auswerfer vorgesehen, mit dessen Hilfe im Schacht gelagerte Artikel auf das Band abgeworfen werden. Die Schächte werden aber üblicherweise manuell nachgefüllt, was einen Nachteil bei sehr hohen Kommissionierleistungen (z.B. 100 Artikel/min) darstellen kann, weil die Schächte nicht schnell genug aufgefüllt werden.

Mit den oben erwähnten herkömmlichen Kommissionierplätzen lassen sich Kommissionierleistungen in der Größenordnung von bis zu 1000 Artikel pro Stunde realisieren. Die Kommissionierperson stellt dabei einen Flaschenhals dar, da sie manuell arbeitet und somit die maximale Anzahl von Zugriffen auf ca. 1000 pro Stunde begrenzt.

Trotz - im Vergleich zu Kommissionierautomaten - relativ geringen Kommissionierleistungen müssen herkömmliche Kommissionierplätze eingesetzt werden, da nicht jeder Artikel in einem Automatenschacht bevorratet werden kann. Insbesondere runde Artikel, wie z.B. Flaschen und Ähnliches, sind mit Kommissionierautomaten schwer handhabbar. Gleiches gilt für Artikel mit größeren Abmessungen, von denen dann nur eine geringe Anzahl pro Kommissionierschacht in einem Kommissionierautomaten bevorratet werden kann.

Obwohl der Kommissionierautomat ein vollautomatisiertes und mannlos funktionierendes System darstellt, besteht ein Bedürfnis nach einer weitergehenden Automatisierung, insbesondere im Bereich von Artikeln, welche mit einem Kommissionierautomaten nicht handhabbar sind.

Des Weiteren sind Entladeroboter und Beladeroboter bekannt, um insbesondere Paletten mit Artikeln zu bestücken bzw. Artikel von den Paletten zu nehmen. Im Dokument DE 10 2006 024 900 A1 wird eine Vorrichtung zum Handhaben von Paletten in und außerhalb einer sogenannten Palettierzelle beschrieben. Leere Paletten werden zum Beladen an einem Beladeplatz positionieren. Dann werden Artikel, wie z.B. Schachteln, über eine Rollenbahn zu einem Palettierroboter gefördert, um die Artikel auf die Palette zu schichten. Um die Artikel von der Rollenbahn auf die Palette umzusetzen, wird eine Saughebevorrichtung des Palettierroboters eingesetzt, die oberhalb der Rollenbahn an einem rahmenartigen Gestell in horizontaler und vertikaler Richtung beweglich befestigt ist. Mit einer derartigen Gesamtvorrichtung können bis zu einigen 100 Artikeln pro Stunde umgesetzt werden. Ähnliches gilt für Depalettierungsroboter, die umgekehrt arbeiten, d.h. die mit einem Artikelstapel beladene Paletten werden lagenweise oder einzeln depalettiert.

Abgesehen von dem relativ großen Platz- und Raumbedarf derartiger Roboter sind diese schon aufgrund ihrer geringen Leistung (Greif- und Umsetzvorgänge/Stunde) für den Einsatz in Kommissionieranlagen, insbesondere für den Vorgang des Transferierens von Artikeln aus Lagerladehilfsmitteln in Auftragsladehilfsmittel nicht geeignet. Ein Greifen von kleineren Artikeleinheiten, wie z.B. Schachteln, vermögen diese Roboter nicht zu leisten. Bisherige konventionelle Roboterlösungen sind im Wesentlichen auf die Handhabung von sogenannter Bulk-Ware bzw. Artikel in Kartons oder Umverpackungen (typischerweise vier oder mehr Artikel pro Einheit) beschränkt.

Verpackungsroboter bzw. Palettierroboter, wie sie oben erwähnt sind, werden in den Dokumenten DE 40 27 497 A1 und US 5, 175,692 B offenbart.

Die DE 198 20 537 A1 offenbart einen Roboter zum Sortieren und Verpacken von Würstchen, um die Würstchen zu einem nächst größeren Gebinde zusammenzustellen, wie es bereits ebenfalls oben erwähnt wurde. Ein Sortierroboter wird allgemein in der WO 03/091107 A1 offenbart.

Es ist daher eine Aufgabe der vorliegenden Erfindung, eine Vorrichtung zum mannlosen, vollautomatisierten Kommissionieren von Artikeln gemäß Kommissionieraufträgen bereitzustellen, wobei Kommissionierleistungen möglich sein sollen, die signifikant über der Marke von 1000 Zugriffen pro Stunde liegen. Die zu kommissionierenden Artikel sollen auch Artikel enthalten, die mit einem Kommissionierautomaten gar nicht oder nur schlecht handhabbar sind. Dabei soll insbesondere nach dem Prinzip "Ware zum Mann" gearbeitet werden, um Artikel, die in Lagerladehilfsmitteln bevorratet sind, in Auftragsladehilfsmittel umzusetzen.

Diese Aufgabe wird mit einem Lager- und Kommissioniersystem gemäß dem Anspruch 1

Anstatt einer händischen Kommissionierung erfolgt die Kommissionierung nun vollautomatisch mit einer Robotergreifeinheit. Der Roboter übernimmt die Aufgabe des Kommissionierers voll. Er greift die Artikel, was ursprünglich einer der Hauptgründe war, warum man überhaupt Menschen beim Auftragskommissionieren eingesetzt hat, und setzt gegriffene Artikel mit einer wesentlich höheren Geschwindigkeit und Präzision um. Menschen werden in einem erfindungsgemäßen System - zumindest zum Kommissionieren - nicht mehr benötigt. Der Roboter kann ohne Probleme 1500 Artikel pro Stunde von einem Förderband greifen und z.B. auf ein zweites Förderband absetzen, das seitlich zum zweiten Förderband angeordnete Auftragsbehälter mit den gemäß den Kommissionieraufträgen vorbestellten Artikeln versorgt und somit als Sorter dient. Mit einer Kommissionierleistung von sogar bis zu 4000 Stück pro Stunden liegt man also genau im Sektor zwischen der herkömmlichen manuellen Kommissionierung (1.000 Stück pro Stunde) und der klassischen Automatenkommissionierung (10.000 Stück pro Stunde und mehr). Der Roboter macht auch keine Fehler beim Greifen. Die Artikel werden vorzugsweise einzeln umgesetzt, was aufgrund der hohen Geschwindigkeit problemlos möglich ist, so dass immer die richtige Anzahl von Artikeln eines Typs umgesetzt werden, was beim mamuellen Kommissionieren nicht immer der Fall ist.

Die Anschaffungskosten für einen derartigen Greif- und Umsetzroboter amortisieren sich üblicherweise innerhalb von zwölf bis achtzehn Monaten, und zwar trotz relativ hoher Anschaffungskosten. In diesem Zusammenhang ist zu beachten, dass beim erfindungsgemäßen System kein Personal benötigt wird, so dass man sich über längere Zeit gesehen die Personalkosten vollständig einspart.

Ferner ist die Kommissionierfehlerrate auch deshalb bedeutend geringer, weil ein Roboter niemals müde wird, so dass sich der bei Menschen mit zunehmender Arbeitszeit negativ bemerkbar machende Konzentrationsabfall vorliegend nicht ergibt. Mit dem erfindungsgemäßen System kann man an sieben Tagen jeweils vierundzwanzig Stunden arbeiten.

Das system weist ferner eine Bilderkennungseinheit zum Erfassen und Auswerten einer Position bzw. eines Orts und einer Orientierung eines jeden Artikels in dem Strom auf der ersten Fördertechnik auf, wobei die Bilderkennungseinheit stromaufwärts relativ zur Greifeinheit angeordnet ist und selbst chaotisch orientierte Artikel innerhalb des Stroms auflösen, und insbesondere identifizieren, kann.

Die Bilderkennungseinheit kann ein Kamerasystem sein, mit dem Bilder der Artikelverteilung auf der ersten Fördertechnik aufgenommen werden. Dabei ist es irrelevant, ob die Artikel direkt auf der Fördertechnik oder in Ladehilfsmittel gefördert werden. Die erfindungsgemäß eingesetzte Bildverarbeitungssoftware ist in der Lage selbst Artikel in einer oberen Schicht eines Artikelhaufens bzw. -stapels derart aufzulösen, dass ein jeweiliger Ort (Position) und eine jeweilige Orientierung bekannt sind, um der Greifeinheit entsprechende Positionsdaten (relativ zur Fördertechnik) zum Greifen der Artikel übermitteln zu können. Die Bildverarbeitung vereinfacht sich entsprechend, wenn die Artikel einigermaßen geordnet vorliegen, wie z.B. in einem Behälter oder auf einem Tablar mit Fachunterteilung. Die Bilderkennungseinheit muss dann lediglich den Ort solcher Artikel bestimmen, die tatsächlich vorhanden sind.

Weiter ist es bevorzugt, wenn jeder Artikel auf einem eigenen Artikelladehilfsmittel an einer jeweils fest vorgegebenen Position auf der ersten Förderstrecke in den Greifbereich hineingefördert und dort samt dem Artikelladehilfsmittel gegriffen und umgesetzt wird.

Wenn jeder Artikel auf einem separaten Artikelladehilfsmittel, wie z.B. einem Tablar, bereitgestellt wird, kann die Greifvorrichtung ohne Bilderkennung auskommen. Dazu ist es erforderlich, dass diese Tablare an vorbestimmten (Raster-)Punkten relativ zur ersten Förderstrecke, wie z.B. einem Gurtband, ausgerichtet werden, bevor sie in den Arbeits- bzw. Greifbereich der Greifeinheit kommen. Eine übergeordnete Steuereinrichtung, wie z.B. ein Materialflussrechner oder ein Lagerverwaltungsrechner, hat dann Kenntnis darüber, welcher Artikel auf welcher Position des Förderbands angeordnet ist. Aufgrund der Kenntnis der Fördergeschwindigkeit lassen sich somit die Position und Orientierung der zu kommissionierenden Artikel vorhersagen und in Form von Positionssteuerdaten an die Greifeinheit vorab übermitteln. Des Weiteren können die geometrischen Abmessungen der Artikel im System hinterlegt sein, um der Greifeinheit bereits vorab die richtigen Anfahrpositionen (von oben, von links, von rechts, etc) zum Initiieren eines Greifvorganges zu übermitteln.

Trotz der hervorragenden Zuverlässigkeit heutiger Bildverarbeitungsprogramme stellt diese Lösung einen gangbaren Weg dar, wenn man ohne Bilderkennungseinheit auskommen möchte. Dieser Aspekt spielt insbesondere bei der Nachrüstung bzw. Umrüstung von bereits bestehenden Kommissionieranlagen eine Rolle. Die Übermittlung von Steuerdaten für einen Roboter ist mit gängigen Systemen zwar problemlos möglich. Die Berechnung von Anfahrpositionen kann jedoch, insbesondere für alte Systeme, eine größere rechentechnische Herausforderung darstellen, so dass einige Betreiber von Kommissionieranlagen möglicherweise auf eine Bildverarbeitung verzichten wollen. Dies ist auf die oben beschriebene Art möglich.

Gemäß einer weiteren bevorzugten Ausführungsform kann die Greifeinheit Artikel mit einem jeweiligen Gesamtgewicht von bis zu 2 kg mit Beschleunigungen von bis zu 150 m/s² umsetzen. Der Arbeitsbereich hat vorzugsweise einen Durchmesser von 1500 mm, und zwar bei einem Hub von vorzugsweise 60 mm.

Ohne Last kann der Greifroboter, wie er bei der vorliegenden Erfindung eingesetzt wird, Beschleunigungen von bis zu 10 g bewirken. Diese Eigenschaften ermöglichen die enorme Geschwindigkeit beim Umsetzen und somit die Erhöhung der Kommissionierleistung auf eine Größenordnung von sogar bis zu 4000 Artikel pro Stunde.

Erfindungsgemäß ist zumindest eine zweite Fördertechnik vorgesehen, die im Arbeitsbereich der Greifeinheit schräg, vorzugsweise senkrecht an die erste Fördertechnik koppelt und die mit dem Auftragsladehilfsmittelpuffer, insbesondere mit den Zielstellen, verbunden ist.

Die zweite Fördertechnik dient dann als Sorter und versorgt eine Vielzahl von Zielstellen bzw. Auftragsladehilfsmitteln, wie z.B. Auftragsbehälter, mit zu kommissionierenden Artikeln. Dies ist besonders von Vorteil, wenn mehrere Greifroboter seriell hintereinander relativ zur ersten Förderstrecke angeordnet sind. Der ersten Greifroboter kann dann solche Artikel aus dem Artikelstrom greifen, die mit unter chaotisch im Artikelstrom angeordnet sind, ohne alle anderen Artikel des Stroms, die nicht Zielstellen der dieser Greifeinheit zugeordneten zweiten Förderstrecke zugewiesen sind, ebenfalls von der ersten Förderstrecke heruntergefördert werden, wie es beispielsweise beim herkömmlichen Einsatz von Linearschiebem, Drehschiebern, Anschlägen, etc. der Fall war. Ein gezielter Zugriff auf beliebig auswählbare Artikel im Artikelstrom auf der ersten Fördertechnik ist mit einer überragenden Geschwindigkeit möglich.

Gemäß einer weiteren bevorzugten Ausführungsform umfasst die zweite Fördertechnik eine Vielzahl von angetriebenen Stauförderern und/oder Schwerkraftbahnen, von denen jeder bzw. jede in einer Zielstelle enden kann. Der Einsatz von Stauförderern bzw. -bahnen hat sich als besonders vorteilhaft herausgestellt, da dann der Verkehr der Auftragsladehilfsmittel besser fließt, insbesondere wenn die Auftragsladehilfsmittel während ihrer Befüllung auf einer Auftragsladehilfsmittel-Förderstrecke verbleiben, d.h. nicht in einen Puffer ausgeschleust werden. Mit Hilfe der Stauförderer können alle Artikel eines Auftrags gesammelt werden, bevor sie in ein Auftragsladehilfsmittel abgegeben werden. Während die Artikel gesammelt werden, können die Auftragsladehilfsmittel auf der Auftragsladehilfsmittel-Fördertechnik frei an den Staubahnen vorbeitransportiert werden. Nur im Falle einer Übergabe eines gesammelten, und somit abgeschlossenen, Kommissionierauftrags wird der Ladehilfsmittelfluss auf der Auftragsladehilfsmittel-Fördertechnik angehalten. Dies erhöht den Durchsatz an Auftragsladehilfsmitteln im Gesamtsystem.

Bei einer besonderen Ausgestaltung der Erfindung ist die zweite Fördertechnik mit der ersten Fördertechnik auf einer Höhe und/oder darunter angeordnet.

Da die Greifeinrichtung vorzugsweise nur einen begrenzten Hub hat, ist es von Vorteil, wenn die zweite Fördertechnik annähernd auf der gleichen Höhe wie die erste Fördertechnik angeordnet ist. Bei einer Anordnung, bei der die zweite Fördertechnik unterhalb der ersten Fördertechnik angeordnet ist, können Artikel, die von der Greifeinrichtung gegriffen sind, oberhalb der zweiten Fördertechnik abgeworfen werden. Auf diese Weise ist es möglich, dass man mehrere zweite Fördertechnikstrecken übereinander anordnet, und zwar jeweils mit einem leichten horizontalen Versatz, so dass jede zweite Fördertechnikstrecke ein zugeordnetes Abwurffenster aufweist, damit Artikel auf sie abgeworfen werden können. Dies gilt natürlich nur unter der Voraussetzung, dass die Artikel beim Abwerfen nicht zerbrechen. Schwerkraftbahnen haben den Vorteil, dass für eine Bewegung der auf der Schwerkraftbahn befindlichen Artikel kein Antrieb erforderlich ist. Die Schwerkraftbahnen können beispielsweise in Form von relativ glatten Blechen (Rutschen), Losrollenbahnen, etc. implementiert sein, die von der ersten Fördertechnik hin zu den Auftragsladehilfsmitteln abfallend geneigt sind.

Außerdem hat es sich als vorteilhaft herausgestellt, wenn die Steuereinheit eine Fördergeschwindigkeit der ersten Fördertechnik in Abhängigkeit von einer Artikeldichte auf der ersten Fördertechnik regelt.

Wenn die Artikeldichte auf der ersten Fördertechnik sehr hoch ist, kann es aus mehreren Gründen von Vorteil sein, wenn man die Fördergeschwindigkeit erniedrigt. Zum einen erleichtert dies im Falle einer computergestützten Bilderkennung (Artikelidentifizierung umfassend Positions- und Orientierungsbestimmung) die Auflösung einzelner Artikel auf der ersten Fördertechnik. Befinden sich sehr viele Artikel auf der ersten Fördertechnik, kann die Verringerung sogar zwingend erforderlich sein, um der Bilderkennungseinheit ausreichend Zeit zu geben, um die für eine Identifizierung erforderliche Rechenzeit zur Verfügung zu stellen. Befinden sich hingegen nur wenig Artikel auf der ersten Fördertechnik, d.h., wenn die Artikeldichte gering ist, kann die erste Fördertechnik ggf. mit einer höheren Fördergeschwindigkeit betrieben werden. Die Greifeinheit ist üblicherweise in der Lage, selbst einem Artikel mit höherer Geschwindigkeit auf der ersten Fördertechnik während des Greifvorgangs zu folgen.

Gemäß einer weiteren bevorzugten Ausführungsform ist ferner eine Auftragsladehilfsmittel-Fördertechnik vorgesehen, die im Arbeitsbereich der Greifeinheit unter der ersten Fördertechnik hindurchgeführt ist und/oder die Zielstellen mit einem Versandbereich verbindet.

Wenn eine Auftragsladehilfsmittel-Fördertechnik, wie z.B. einer Auftragsbehälter-Fördertechnik, direkt unter der ersten Fördertechnik hindurchgeführt wird, und zwar im Bereich der Greifeinheit, kann die Greifeinheit gegriffene Artikel direkt in einen Auftragsbehälter abwerfen. Wenn der Auftragsbehälterfluss und der Artikelfluss entsprechend aufeinander abgestimmt sind, kann der Auftragsbehälter während dem Unterfahren der Greifeinheit mit einem zu kommissionierenden Artikel bestückt werden.

Hat man mehrere Greifeinheiten hintereinandergeschaltet und führt man die Auftragsbehälter-Fördertechnik S-förmig unterhalb dieser Vielzahl von Greifeinheiten hindurch, können die Auftragsbehälter während einer kontinuierlichen Fahrt befüllt werden. In diesem Fall ist der S-förmige Auftragsbehälter-Fördertechnikabschnitt als Auftragsladehilfsmittelpuffer anzusehen.

Eine direkte Verbindung der Auftragsladehilfsmittel-Fördertechnik mit einem Versandbereich ermöglicht einen direkten Transport eines fertig kommissionierten Auftragsbehälters aus dem System der Erfindung heraus. Die Behälter müssen nicht zwischengelagert werden, sondern können direkt in, vorzugsweise wartende, Transportfahrzeuge geladen werden. Dies erhöht wiederum den Durchsatz, weil die Verweildauer eines Auftragsladehilfsmittels innerhalb des erfindungsgemäßen Systems verkürzt wird.

Die esrten Fördertechnik bis zu 1800 Lagerladehilfsmittel pro Stunde durch den Greifbereich führen, wobei die Lagerladehilfsmittel sortenrein und/oder fachunterteilt sortenrein mit Artikeln bestückt sind.

Als Lagerladehilfsmittel können z.B. Lagerbehälter, Tablare oder Ähnliches eingesetzt werden. Wenn der Behälter bzw. das Tablar ausschließlich mit Artikeln einer einzigen Sorte bestückt ist, spricht man von einer "sortenreinen" Bestückung. Sowohl Behälter als auch Tablare können jedoch auch unterteilt sein, um Waren unterschiedlicher Typen in ein und demselben Ladehilfsmittel jeweils sortenrein zu lagern. Unterteilt man jeden Behälter bzw. jedes Tablar in vier Bereiche, so können bei einem Durchsatz von 1800 Behältern bzw. Tablaren pro Stunde bis zu 7200 verschiedene Artikeltypen an einer Greifeinheit pro Stunde vorbeigeführt werden. Übliche Artikelsortimente, die mit der vorliegenden Erfindung gehandhabt werden, umfassen zwischen 5000 und 7000 verschiedene Artikeltypen. In diesem Sinne kann das komplette Lager (Artikelsortiment) innerhalb einer Stunde zumindest einmal an der Greifeinheit vorbeigeführt werden. Besonders häufig abgerufene Artikeltypen können dabei mehrfach in, mitunter verschiedenen, Lagerladehilfsmitteln bevorratet werden, so dass diese Artikeltypen öfters an der Greifeinheit vorbeigeführt werden. Artikeltypen, die wiederum weniger häufig abgerufen werden, d.h. weniger häufig in Kommissionieraufträgen erscheinen, können in dementsprechend verringerten Stückzahlen in dem Gesamtartikelsortiment bevorratet werden. Die klassische ABC-Verteilung kann berücksichtigt werden. Es versteht sich, dass die eben genannten Zahlen exemplarischer Natur sind und lediglich zum Zecke einer Veranschaulichung anhand eines Beispiels aus der Praxis gegeben wurden.

Bei einer besonderen Ausgestaltung ist die Steuereinheit angepasst, Aufnahmepunkte während eines kontinuierlichen Förderbetriebs der ersten Fördertechnik derart zu verfolgen, dass die Greifeinheit Artikel von der ersten Fördertechnik greifen kann, ohne dass die erste Fördertechnik angehalten wird.

Diese Maßnahme erhöht wiederum den Durchsatz von Artikeln. Die Greifeinheit ist dazu eingerichtet, Artikel von der ersten Fördertechnik zu greifen, während sich die erste Fördertechnik bewegt. Um derartige Bewegungen durchführen zu können, ist es erforderlich, dass die Greifeinheit über Positionsinformationen des zu greifenden Artikels verfügt. In Kenntnis der Fördergeschwindigkeit der ersten Fördertechnik kann die Steuereinheit einen Aufnahmepunkt, an dem die Greifeinheit den zu greifenden Artikel greift, derart vorherberechnen, dass ein Greifer der Greifeinheit genau zum richtigen Zeitpunkt an diesen vorherberechneten Aufnahmepunkt bewegt wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Draufsicht auf ein erfindungsgemäßes System;
- Fig. 2: eine perspektivische Seitenansicht einer Greifeinheit;
- Fig. 3: eine schematisierte Draufsicht auf einen mannlosen, vollautomatisierten Kommissionierplatz gemäß der vorliegenden Erfindung;
- Fig. 4: eine Draufsicht auf eine ersten Abwandlung des erfindungsgemäßen Systems;
- Fig. 5: eine isolierte Draufsicht auf einen abgewandelten Kommissionierplatz gemäß der vorliegenden Erfindung;
- Fig. 6: eine weitere Draufsicht auf einen noch weiteren Kommissionierplatz gemäß der vorliegenden Erfindung;
- Fig. 7: eine Seitenansicht auf eine weitere Ausführungsform eines Kommissionierplatzes gemäß der vorliegenden Erfindung;
- Fig. 8: eine Draufsicht auf ein teilweise bestücktes Tablar, welches fachunterteilt ist;
- Fig. 9: eine isolierte Draufsicht auf die erste Fördertechnik mit aufgeprägten Rasterpunkten zur Festlegung eines inneren Bezugssystems; und
- Fig.10: ein Flussdiagramm eines Verfahrens.

In der nachfolgenden Figurenbeschreibung werden ähnliche Merkmale mit gleichen Bezugszeichen versehen. Abwandlungen werden explizit erläutert werden.

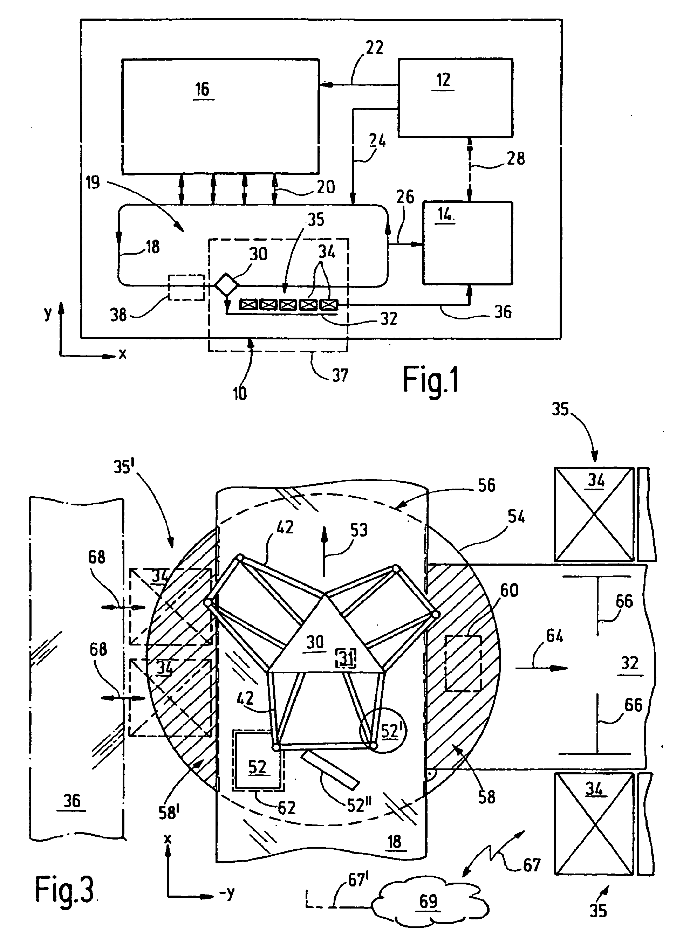

In Fig. 1 ist eine Draufsicht auf ein stark schematisiertes System 10 zum mannlosen und vollautomatisierten Kommissionieren gemäß der vorliegenden Erfindung gezeigt. Das System 10 kann beispielsweise in einem Gebäude (z.B. Lagerhalle) aufgebaut sein. Das System 10 kann als Lager- und/oder Kommissioniersystem eingesetzt werden.

Das System 10 weist hier einen Wareneingangsbereich 12, einen Warenausgangsbereich bzw. Versandbereich 14, einen Lagerbereich 16 sowie eine erste Fördertechnik 18 in Form eines Fördertechnikkreisels 19 auf. Die erste Fördertechnik 18 kann in Form von z.B. Rollenbahnen, Gurtförderern, Kettenförderern, etc. realisiert sein. Die erste Fördertechnik 18 ist über Stichstrecken 20, die in der Fig. 1 in Form von Doppelpfeilen angedeutet sind, direkt mit dem Lagerbereich 16 verbunden. Es versteht sich, dass die Fördertechnikabschnitte 20, die hier als Ein- und Auslagerstiche fungieren, vom gleichen Fördermitteltyp sein können wie die erste Fördertechnik 18. Der Kreisel 19 kann aber auch aufgelöst werden und durch einzelne Förderverbindungen zwischen den einzelnen Systemkomponenten ersetzt werden. Die Fördertechnik 18 könnte z.B. im Wareneingang 12 starten und im Warenausgang 14 enden, ohne dass Wareneingang 12 und Warenausgang 14 über eine Fördertechnik miteinander verbunden sind.

Der Lagerbereich 16 kann aber auch über eine weitere Fördertechnik 22 direkt mit dem Wareneingang 12 verbunden sein, um einzulagernde Ladehilfsmittel, wie z.B. Tablare, Behälter, etc., nicht umständlich und lange über den Kreisel 19 führen zu müssen, wobei der Kreisel 19 selbst über einen weiteren Fördertechnikabschnitt 24 mit dem Wareneingang 12 direkt verbunden sein kann. Der Kreisel 19 kann auch direkt mit dem Warenausgang 14 verbunden sein, um z.B. Lagerbehälter aus dem Lagerbereich 16 direkt in den Versand 14 schicken zu können, ohne dass eine Kommissionierung (Umsetzung von Artikeln) erforderlich ist. Dies kann insbesondere bei Großaufträgen mit großen Stückzahlen eines gleichen Artikeltyps der Fall sein, wenn z.B. ganze Paletten, Behälter oder Tablar mit Artikeln des gleichen Typs bestellt werden.

Optional können auch der Wareneingang 12 und der Warenausgang direkt miteinander verbunden sein, wie es durch einen Pfeil 28 mit Strichlinie angedeutet ist.

An die erste Fördertechnik 18 koppelt eine Greifeinheit 30. Die Greifeinheit 30 greift Artikel, die sich entweder direkt auf der Fördertechnik 18 befinden oder die in bzw. auf Ladehilfsmitteln gelagert sind, wobei die Ladehilfsmittel selbst wiederum auf der ersten Fördertechnik stehen. Die Greifeinheit 30 ist vorzugsweise an einer Gebäudedecke stationär gelagert. Optional ist über der ersten Fördertechnik 18 an einem Rahmengestell (nicht dargestellt) montiert. Die Greifeinheit 30 greift Artikel und setzt sie um. Im Beispiel der Fig. 1 werden die Artikel auf eine zweite Fördertechnik 32, z.B. ein weiteres Förderband, umgesetzt, oder darauf abgeworfen. Die zweite Fördertechnik 32 koppelt an eine Vielzahl von Auftragsladehilfsmitteln, wie z.B. Auftragsbehälter 34, die in einem Auftragsladehilfsmittelpuffer 35 zwischengespeichert werden können. Der Puffer 35 grenzt in der Fig. 1 direkt an die zweite Fördertechnik 32 an. Mit Hilfe einer Auftragsladehilfsmittel-Fördertechnik 36 lassen sich die Auftragsladehilfsmittel 34 wiederum in den Versandbereich 14 transportieren.

Abgearbeitete Lagerladehilfsmittel werden nach einem Passieren der Greifeinheit 30 wieder in den Lagerbereich 16 oder, wenn sie geleert sind, in den Wareneingang 12 zurücktransportiert.

In dem mit dem Bezugszeichen 37 bezeichneten rechteckigen Fenster, welches in der Fig. 1 mit einer Strichlinie dargestellt ist, ist ein mannloser, vollautomatisierter Kommissionierplatz umrandet. Der Kommissionierplatz 37 weist zumindest die Greifeinheit 30 auf. Der Kommissionierplatz 37 kann ferner die erste Fördertechnik 18, die zweite Fördertechnik 32 sowie den Auftragsladehilfsmittelpuffer 35 aufweisen.

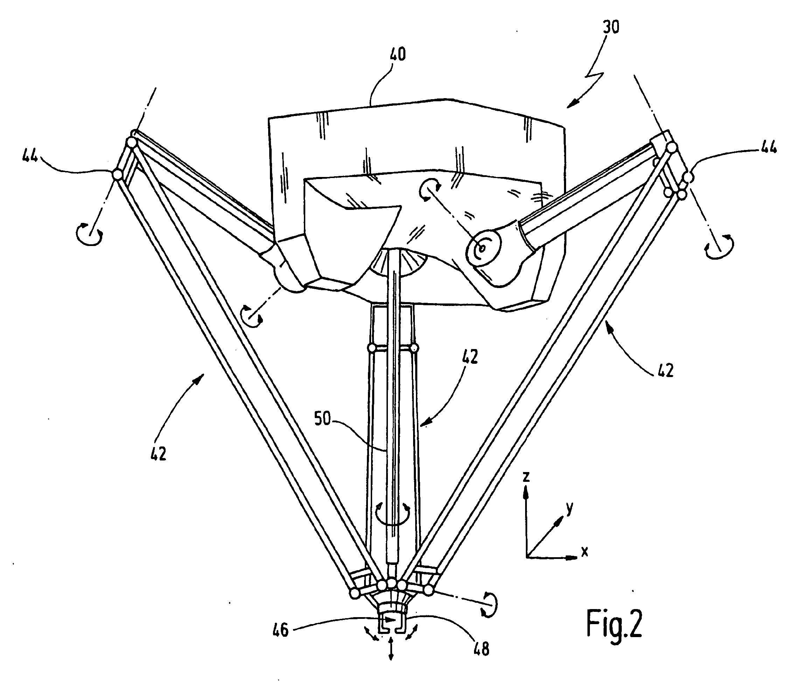

Das Herzstück der vorliegenden Erfindung ist in Form der Greifeinheit 30 in der Fig. 2 schematisiert in einer perspektivischen Seitenansicht dargestellt.

Die Greifereinheit 30 weist ein Gehäuse 40 auf, in welchem mehrere Arme 42 gelagert sind. In der Fig. 2 sind exemplarisch drei Arme 42 gezeigt. Die Arme 42 sind hier exemplarisch zweigliedrig aufgebaut, wobei die Glieder drehbar mit Hilfe von Gelenken 44 miteinander verbunden sind. Die Arme 42 sind drehbar im Gehäuse 40 gelagert. Gegenüberliegende Enden der Arme 42 sind gelenkig mit einem Greifer 46 verbunden, der wiederum hier exemplarisch zwei mechanische Greifzangen 48 aufweist. Andere Greifertypen, wie z.B. pneumatische Saugeinrichtungen, können ebenfalls verwendet werden.

Neben den drei Armen 42, die eine translatorische Bewegung in allen drei Raumrichtungen (X-, Y- und Z-Richtung) zulassen, ist ein vierter Arm 50 in Form einer Drehstange 50 mit dem Greifer 46 verbunden. Die Drehstange 50 ist um ihre Längsachse drehbar, wie es mit Hilfe eines runden Doppelpfeils angedeutet ist. Mit Hilfe der Drehstange 50 wird ein vierter Freiheitsgrad (Rotation um die Z-Achse) definiert, so dass gegriffene Artikel um eine Z-Achse drehbar sind. Natürlich könnte die Anzahl der Bewegungsgrade durch entsprechende Vorkehrungen erhöht werden. Dazu wären jedoch weitere mechanische Elemente notwendig, die das Gewicht, und somit die Geschwindigkeit, mit der der Greifer 46 bewegt werden kann, einschränken würden.

Die Greifeinheit 30 ist dazu in der Lage, einzelne Objekte bzw. Artikel, die beliebig aus einem Artikelstrom (Ladehilfsmittel oder Artikelhaufen bzw. -gruppierungen) ausgewählt werden können, besonders schnell und präzise von einem Ort an einen anderen Ort zu bewegen. Ein herausragendes Merkmal dabei ist die Geschwindigkeit der Greifeinheit 30, dank derer die Greifeinheit 30 bis zu 150 Greif- und Umsetz-Zyklen pro Minute schaffen kann. Hohe Bahngeschwindigkeiten und eine herausragende Positionsgenauigkeit sind sichergestellt. Eine geeignete Steuerungssoftware ermöglicht es der Greifeinheit 30, schnell laufenden Fördertechniken 18 mit hoher Genauigkeit zu folgen.

Wie bereits erwähnt, kann das Gehäuse 40 entweder direkt an einer Gebäudedecke oder an einem Gestell derart montiert werden, dass die erste Fördertechnik 18 (vergleiche Fig. 1) ohne Probleme unter der Greifeinheit 30 hindurchgeführt werden kann. Hier kommt es zu keinen Problemen hinsichtlich der räumlichen Anordnung der Komponenten. Der Platz den Kommissionierpersonen üblicherweise zum Arbeiten brauchen, entfällt vollständig.

Auf einen Wirkungsbereich der Greifeinheit 30 wird nachfolgend in Zusammenhang mit der Fig. 3 noch genauer eingegangen werden.

Die Greifeinheit 30 hat einen Bewegungsradius von vorzugsweise bis zu 1500 mm, wobei maximale Beschleunigungen von 10 g möglich sind. Die Greiteinheit 30 kann Artikel von bis zu 2 kg heben.

In der Draufsicht der Fig. 3 ist die Greifeinheit 30 bzw. deren Gehäuse 40 ist in Form eines Dreiecks dargestellt. In das Gehäuse kann eine Steuereinheit 31 integriert sein, die in der Fig. 3 mit Hilfe eines rechteckigen Kastens aus einer Strichlinie angedeutet ist.

Die Greifeinheit 30 ist vorzugsweise mittig zu einer Längsachse der ersten Fördertechnik 18 angeordnet, um auf eine maximale Fläche auf der ersten Fördertechnik 18 zugreifen zu können. Die Greifeinheit 30 weist einen nahezu kreisförmigen Arbeitsbereich 54 auf. Der Arbeitsbereich 54 stellt solche Positionen im Raum dar, die der Greifer 46 (vergleiche Fig. 2) bei maximal ausgefahrener Stellung der Arme 42 erreichen kann. Der sich mit der ersten Fördertechnik 18 überlappende Bereich des Arbeitsbereichs 54 stellt einen Greifbereich 56 dar, der in der Fig. 3 ebenfalls mit einer Strichlinie umrandet ist. Der Greifbereich 56 ähnelt einem Kreis, dem man seitlich um zwei Kreissegmente beschnitten hat.

Innerhalb des rechten Kreissegments gibt es in der Fig. 3 einen Überlappungsbereich des Arbeitsbereichs 54 mit der zweiten Fördertechnik 32, die zum Abtransport von umgesetzten Artikeln 52, 52', 52" dient. Dieser Bereich ist in der Fig. 3 schraffiert gezeichnet und wird mit dem Bezugszeichen 58 bezeichnet. Er stellt einen Abgabebereicht 58 dar. Innerhalb des Abgabebereichs 58 ist mit Hilfe einer Strichlinie ein Abgabepunkt 60 gezeigt, dessen Fläche im Wesentlichen mit der Fläche eines Artikels 52 übereinstimmt, der sich noch auf der ersten Fördertechnik 18 innerhalb eines ebenfalls mit einer Strichlinie angedeuteten Aufnahmepunkts 62 befindet. Wenn im Nachfolgenden von Abgabe- oder Aufnahmepunkten gesprochen wird, so kann damit auch eine Fläche gemeint sein. Bei dem Artikel 52 kann es sich z.B. um eine Medikamentenpackung handeln. Weitere andere Artikeltypen (bzw. -formen) auf der ersten Fördertechnik 18 sind in Form eines Kreises 52' und eines Zylinders 52" angedeutet. Die Artikel 52, 52' und 52" werden in der Fig. 3 auf der Fördertechnik 18 nach oben befördert, wie es durch einen Pfeil 53 (Förderrichtung) angedeutet ist.

Die Greifeinheit 30 greift den quaderförmigen Artikel 52 vom Aufnahmepunkt 52, während sich die erste Fördertechnik 18 kontinuierlich fortbewegt. Sobald der Artikel 52 gegriffen ist, bewegt die Greifeinheit 30 den Artikel 52 aus dem Greifbereich 56 in den Ablagebereich 58 und platziert den Artikel 52 im Abgabepunkt 60 auf der zweiten Fördertechnik 32, die hier senkrecht zur ersten Fördertechnik 18 orientiert ist. Seitlich zur zweiten Fördertechnik 32 sind sowohl links als auch rechts eine Vielzahl von Auftragsbehältern 34 angeordnet, die in Puffern 35 zwischengespeichert sind.

Die zweite Fördertechnik 32 ist hier in Form eines weiteren Gurtförderers realisiert, der diskret oder kontinuierlich in Richtung eines Pfeils 64 bewegt wird. Nachfolgend wird davon ausgegangen, dass auch der Bandförderer 32 kontinuierlich bewegt wird, um den Durchsatz möglichst hoch zu halten.

Nachdem die Greifeinheit 30 den Artikel 52 im Abgabepunkt 60 abgestellt hat, wird der Artikel 52 in Richtung der Puffer 35 gefördert. Jedem Auftragsbehälter 34 ist eine Ausschleuseinrichtung 66, hier exemplarisch in Form eines T-förmigen Schiebers, zugeordnet. Ein übergeordneter Materialflussrechner bzw. Lagerverwaltungsrechner 69 koordiniert die Ausschleusung des auf der zweiten Fördertechnik 32 befindlichen Artikels 52 in einen der Auftragsbehälter 34 mittels Betätigung eines zugeordneten Schiebers 66. Die Zuordnung des Artikels 52 zu einem der Auftragsbehälter 34 ist bereits vorab erfolgt und im Rechner 69 hinterlegt. Eine Fördertechnik zum Abtransport der in der Fig. 3 rechts dargestellten Auftragsbehälter 34 ist aus Gründen der Übersichtlichkeit nicht gezeigt.

Eine Fördertechnik 36 zum An- und Abtransport von Auftragsbehältern 34 ist jedoch im linken Teil der Fig. 3 mit einer Strichlinie angedeutet. Mit Hilfe dieser Fördertechnik 36 lassen sich Auftragsbehälter 34 in einen Auftragsbehälterpuffer 35' transportieren, der optional direkt an die erste Fördertechnik 18 angrenzen kann und der dann im Arbeitsbereich 54 der Greifeinheit 30 liegt. Diese Auftragsbehälter 34 weiden mit Hilfe von Ein-/Ausschleuseinrichtungen 68 (Z.B. Riemenaus- und -einschleuser, Schieber, etc.) zwischen dem Puffer 35' und der Fördertechnik 36 transferiert. In der Fig. 3 sind exemplarisch zwei Auftragsbehälter 34 des Puffers 35' innerhalb eines weiteren Abgabebereichs 58' angeordnet, der ebenfalls schraffiert hervorgehoben ist. Es versteht sich, dass bei geschickter Platzierung bzw. Anordnung der Auftragsbehälter 34 des Puffers 35' auch mehr als zwei Auftragsbehälter 34 gleichzeitig von der Greifeinheit 30 mit Artikeln 52, 52', 52" versorgt werden können.

Der linke Teil der Fig. 3 stellt eine Abwandlung gegenüber dem rechten Teil der Fig. 3 dar. Die Auftragsbehälter 34 werden direkt im Arbeitsbereich 54 der Greifeinheit 30 platziert. Insofern fällt eine Sequenzierungsstufe (zweiter Förderer 32) weg. Dafür verkürzt sich die Zeit, bis ein Artikel in seinen zugeordneten Auftragsbehälter 34 verbracht ist.

Die Fördertechnik 36 könnte auch direkt angrenzend parallel oder schräg zur ersten Fördertechnik 18 verlaufen. Im Falle einer parallelen Anordnung kann man die Ein-/Ausschleuseinrichtungen 68 einsparen, die in der Fig. 3 in Form von Doppelpfeilen veranschaulicht sind. Bei geeigneter Koordination der Bewegungsvorgänge müssen die Auftragsbehälter 34 bzw. die Fördertechnik 36 nicht angehalten werden, während der Arbeitsbereich 54 bzw. der Abgabebereich 58' einer Greifeinheit 30 passiert wird. Die Greifeinheit 30 kann die Artikel direkt in die Auftragsbehälter 34 abgeben, wobei natürlich vorausgesetzt wird, dass es sich um sogenannte "Dropable"-Artikel handelt. Zerbrechliche Artikel sollten auf diese Weise nicht kommissioniert werden. Was die Anordnung der einzelnen Komponenten (Fördertechniken 18, 32) in vertikaler Richtung betrifft, so wird darauf nachfolgend noch detaillierter eingegangen werden.

In der Fig. 3 soll die zweite Fördertechnik 32 nahezu auf dem gleichen Niveau wie die erste Fördertechnik 58 angeordnet sein. Die Auftragsladehilfsmittel-Fördertechnik 36 ist auf einem derartigen Niveau relativ zur ersten Fördertechnik 18 angeordnet, das eine Oberkante eines Auftragsbehälter 34 im Puffer 35' auf der gleichen Höhe wie die erste Fördertechnik 18 oder darunter liegt. Eine derartige vertikale Anordnung empfiehlt sich, da die Hubeinheit 30 in ihrer üblichen Ausführungsform lediglich einen relativ geringen Hub hat, dafür aber sehr hohe Geschwindigkeiten in horizontaler Bewegungsrichtung erreicht. Die Greifeinheit 30 bzw. der Greifer 46 (vergleiche Fig. 2), der auch in Form eines pneumatischen Saugers ausgebildet sein kann, kann mit bis zu 10 g beschleunigt werden.

Bei einer abgewandelten Form der Greifeinheit 30 wird im Bereich des Greifers 46 eine zusätzliche Vertikalhubeinheit am unteren Ende der Arme 42 montiert, um einen zusätzlichen Hub generieren zu können. Bei dieser Ausführungsform ist der Greifer 46 dann vorzugsweise in Form eines pneumatischen Saugers ausgebildet.

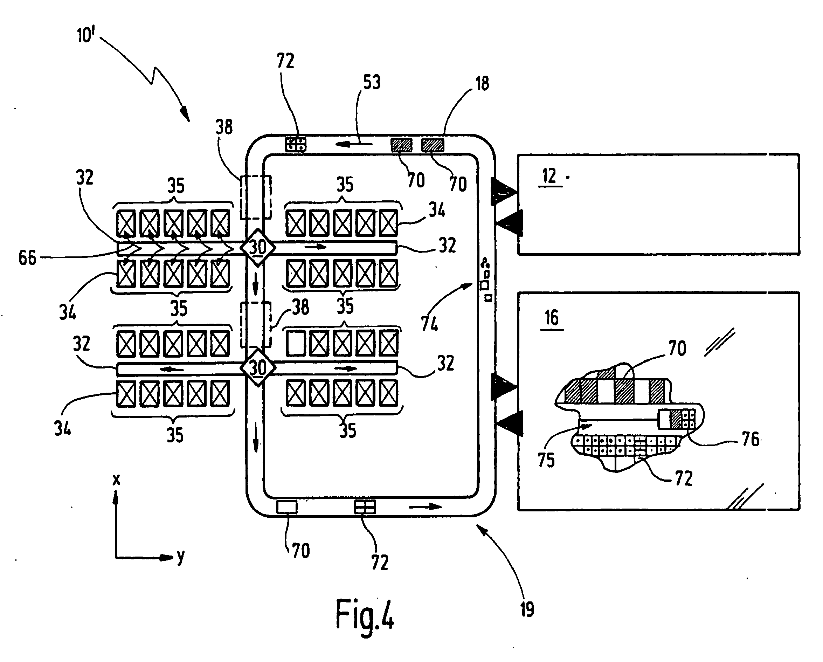

In Fig. 4 ist eine Draufsicht auf eine weitere Ausführungsform eines Kommissioniersystems 10' gemäß der vorliegenden Erfindung gezeigt.

Ähnlich wie das System 10 der Fig. 1 weist das System 10' der Fig. 4 einen Wareneingang 12 und ein Lager 16 auf, die über hier nicht näher bezeichnete und in Form von schwarzen Dreiecken dargestellten Fördertechnikelemente mit einem Kreisel 19 der ersten Fördertechnik 18 verbunden sind.

Im System 10' sind zwei Greifeinheiten 30 seriell hintereinander angeordnet, um Ladehilfsmittel 70, 72 zu entladen bzw. um direkt auf der ersten Fördertechnik 58 befindliche Artikel, wie sie bei 74 gezeigt sind, zu greifen und diese auf zweite Fördertechniken 32 umzusetzen. Die Lagerladehilfsmittel 70, 72 bzw. eine Artikelansammlung 74 werden auf der ersten Fördertechnik 18 gegen den Uhrzeigersinn vom Wareneingang 12 oder dem Lager 16 zu den Greifeinheiten 30 transportiert, wie es durch einen Pfeil 53 gezeigt ist.

Stromaufwärts zu jeder der Greifeinheiten 30 ist vorzugsweise jeweils eine Bilderkennungseinheit 38 angeordnet. Die Bilderkennungseinheit 38 kann in Form eines Kamerasystems ausgebildet sein, dass über der ersten Fördertechnik 18 angeordnet ist und auf die Fördertechnik 18 hinunterblickt. Zum Zwecke einer besseren Bildauflösung können unterhalb eines Fördermittels (z.B. Band) der ersten Fördertechnik Leuchtmittel vorgesehen werden, wobei es sich dann empfiehlt, das Fördermittel der ersten Fördertechnik 18 lichtdurchlässig auszugestalten. Auf diese Weise kann die Auflösung bzw. der Kontrast derart erhöht werden, dass eine Objekterkennungssoftware selbst chaotisch angeordnete Artikel, wie sie z.B. in der Ansammlung 74 vorhanden sein können, bezüglich ihrer Position und Orientierung relativ zur ersten Fördertechnik 18 bestimmen können. Entsprechende Softwarepakete sind kommerziell erhältlich. Das Gleiche gilt für das Kamerasystem.

Jede der zwei Greifeinheiten 30 der Fig. 4 versorgt vorzugsweise zwei senkrecht zur ersten Fördertechnik 18 angeordnete, sekundäre Fördertechniken 32 mit Artikeln. Seitlich zu den zweiten Fördertechniken 32 ist jeweils ein Puffer 35 für einen oder eine Mehrzahl von Auftragsladehilfsmitteln, hier Auftragsbehälter 34, vorgesehen. Fördertechniken, mit denen die Auftragsbehälter 34 in die Puffer 35 hineintransportiert werden und aus den Puffern 35 zu einem hier nicht dargestellten Warenausgang transportiert werden, sind aus Übersichtlichkeitsgründen nicht gezeigt. Ähnliches gilt für die Ausschleuseinrichtungen 66, die exemplarisch lediglich in der linken, zweiten Fördertechnik 32 des oberen vollautomatisierten und mannlos betriebenen Kommissionierplatzes mit der ersten Greifeinheit 30 gezeigt sind.

Die zweiten Fördertechniken 32 sind hier auf gleicher Höhe wie die erste Fördertechnik 18 angeordnet. Mit der in der Fig. 4 gezeigten Anordnung lassen sich bis zu vierzig Kommissionieraufträge parallel abarbeiten, da jeder der Puffer 35 fünf Zielstellen aufweist, an denen die Auftragsbehälter 34 positionierbar sind.

Ähnlich wie bei der Fig. 3 könnten die Auftragsladehilfsmittel 34 jedoch auch parallel zur ersten Fördertechnik 18 im Bereich der Greifeinheiten 30 transportiert werden, und zwar vorzugsweise mit der gleichen Geschwindigkeit, wie die Artikel auf der ersten Fördertechnik 18. In diesem Fall könnten Kommissionieraufträge seriell von den beiden Greifeinheiten 30 abgearbeitet werden. Die in der Fig. 4 oben dargestellte Greifeinheit 30 könnte in einem ersten Zyklus alle Artikel von der ersten Fördertechnik 18 in ein Auftragsladehilfsmittel 34 geben, welches dann so relativ zur ersten Fördertechnik 18 angeordnet wäre, dass die Oberkante des Auftragsladehilfsmittels 34 entweder auf der gleichen Höhe wie eine Oberseite der ersten Fördertechnik 18 oder darunter liegt. Alle Artikel, die die erste, obere Greifeinheit 30 nicht schafft, weil die Artikel den Greifbereich verlassen, können nachfolgend von der zweiten Greifeinheit 30 in das parallel mitgeführte Auftragsladehilfsmittel 34 gegeben werden.

Zurückkehrend zu der in der Fig. 4 gezeigten Ausführungsform ist zu bemerken, dass Artikel in unterschiedlicher Art und Weise zur Greifeinheit 30 transportiert werden können. Grafisch mit einem Gitter versehene Rechtecke auf der ersten Fördertechnik 18 stellen in der Fig. 4 Tablare 72 dar, die vorzugsweise sortenrein mit Artikeln bestückt sind. In der Fig. 4 ist oben ein bestücktes Tablar 72 und unten ein leeres Tablar 72 zu sehen. Das leere Tablar 72 hat die Greifeinheiten 30 passiert und wurde von den Greifeinheiten 30 geleert. Rechtecke ohne Gitterstruktur stellen grafisch Lagerbehälter 70 dar. Geschwärzte Lagerbehälter 70, die in der Fig. 4 im oberen Bereich der ersten Fördertechnik 18 transportiert werden, stellen grafisch volle Lagerbehälter 70 dar. Leere Lagerbehälter 70 sind weiß dargestellt (vergleiche den unteren Teil des Kreisels 19 mit einem einzigen leeren Lagerbehälter 70). Die Tablare 72 und die Behälter 70 können im Lager 16 in Regalen gespeichert sein.

Das Lager 16 ist in der Fig. 4 teilweise aufgeschnitten dargestellt. In diesem Bereich ist eine Regalgasse 75 gezeigt, in welcher sich ein Regalbediengerät 76 längs der Regalgasse und vertikal an Regalfronten bewegen kann. Das Regalbediengerät 76 kann hier zwei Lastaufnahmemittel besitzen, um zwei Ladehilfsmittel (Behälter und/oder Tablar) gleichzeitig transportieren zu können. Im oberen Regal werden z.B. Behälter 70 gelagert. Im unteren Regal werden z.B. Tablare 72 gelagert.

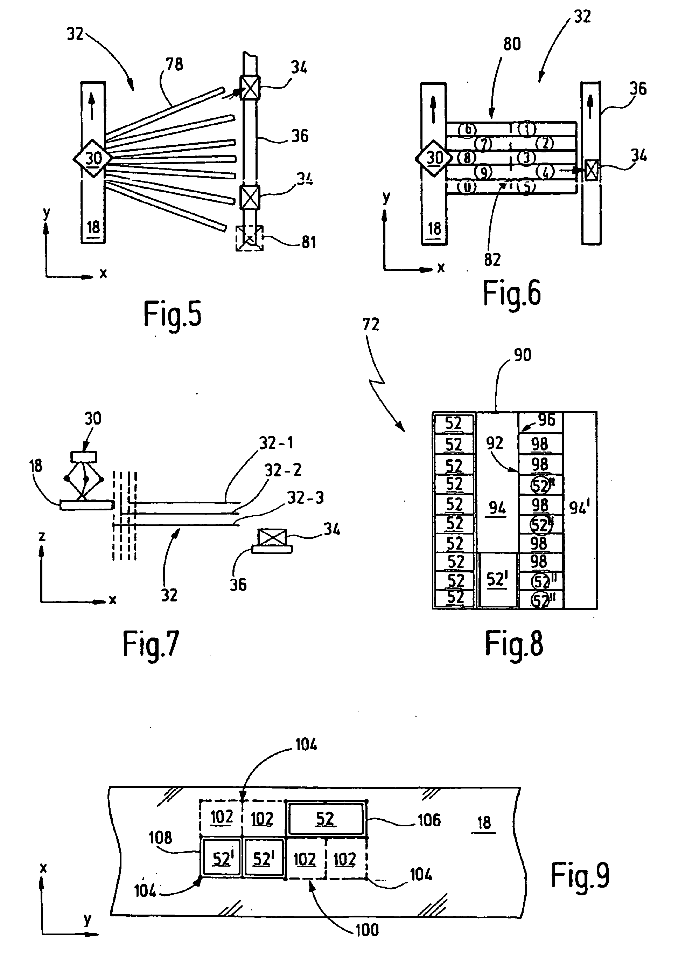

Bezug nehmend auf Fig. 5 ist eine Draufsicht auf isolierte Teile einer weiteren Abwandlung dargestellt.

Die Fig. 5 zeigt eine Greifeinheit 30, die oberhalb einer ersten Fördertechnik 18 angeordnet ist und die eine Vielzahl von Bahnen 78 mit Artikeln versorgen kann. Die linken Enden der Förderbahnen 78 enden alle im Arbeitsbereich der Greifeinheit 30. Die gegenüberliegenden Enden der Förderbahn 78 enden an Zielstellen 81, die hier aut einer Fördertechnik 36 fur Auftragsbehälter 34 angeordnet sind. Es ist möglich, dass an jedem der Greifeinheit 30 gegenüber liegenden Ende der Förderbahnen 78 ein Auftragsbehälter 34 an einer Zielstelle 81 positioniert ist, von denen eine in der Fig. 5 mit einer Strichlinie angedeutet ist.

Bei den Förderbahnen 78 kann es sich z.B. um angetriebene Rollenbahnen oder Gurtbänder handeln. Alternativ können auch Schwerkraftbahnen eingesetzt werden, die z.B. in Form eines, gegenüber einer Horizontalen, schräggestellten Rutschblechs oder in Form von, gegenüber einer Horizontalen, schräggestellten Losrollenbahn ausgebildet sein können.

Bezug nehmend auf Fig. 6 ist eine weitere Abwandlung in einer Draufsicht gezeigt.

Ähnlich wie bei der Fig. 5 ist im linken Teil der Fig. 6 eine Greifeinheit 30 über einer ersten Fördertechnik 18 angeordnet. Seitlich zur ersten Fördertechnik 18 koppelt eine Vielzahl von Stauförderern 80, hier insgesamt fünf Stauförderer 80, an die erste Fördertechnik 18. Die gegenüberliegenden Enden der Stauförderer 80 koppeln ebenfalls an eine Fördertechnik 36 für Auftragsbehälter 34.

Die Länge der Stauförderer ist beliebig wählbar. Wenn die Stauförderer 80 ausreichend lang sind, kann in deren Mitte jeweils ein heb- und senkbarer Anschlag 82 vorgesehen werden, wie er in Fig. 6 mit einer Strichlinie angedeutet ist, um die Stauförderer in mehrere Abschnitte bzw. Bahnen zu unterteilen.

In Fig. 6 sind fünf parallel aneinander grenzende Stauförderer gezeigt, die durch den Anschlag 82 in insgesamt zehn Stauabschnitte unterteilbar sind. Diese zehn Stauabschnitte sind mit den durchlaufenden Ziffern von 0 bis 9 in Kreisen dargestellt.

Artikel, die über die erste Fördertechnik 18 zur Greifeinheit 30 geliefert werden, können je nach Kommissionierauftrag in einen der fünf Stauförderer 50 transferiert werden. Es versteht sich, dass die Stauförderer 80 alle ein Ende aufweisen, welches im Arbeitsbereich der Greifeinheit 30 liegt.

Sobald alle Artikel eines Auftrags in einem der Stauabschnitt 1 bis 5 gesammelt sind, kann das entsprechende Anschlagselement 82 dieses Stauförderers 80 angehoben werden, um so den zweiten Stauabschnitt für einen weiteren Kommissionierauftrag bereitzustellen.

Fertig kommissionierte Aufträge können dann durch vorbeifahrende Auftragsbehälter 34 abgerufen und aufgenommen werden.

Bezug nehmend auf Fig. 7 ist eine Seitenansicht einer weiteren Ausgestaltung gezeigt.

Rechts von einer Greifeinheit 30, die wiederum über einer ersten Fördertechnik 18 angeordnet ist, sind hier drei sekundäre Fördertechniken 32-1, 32-2 und 32-3 vertikal übereinander angeordnet. An ihrem der Greifeinheit 30 gegenüber liegenden Ende ist eine Fördertechnik 36 für Auftragsbehälter 34 angeordnet.

Die drei Fördertechniken 32-1 bis 32-3 sind derart angeordnet, dass sich im Abgabebereich der Greifeinheit 30 vertikale Abgabefenster ergeben, die in der Fig. 7 durch vertikale Strichlinien angedeutet sind. Um die obere Fördertechnik 32-1 mit Artikeln zu versorgen, muss die Greifeinheit 30 am weitesten in die X-Richtung bewegt werden. Um die unterste Fördertechnik 32-3 mit Artikeln zu versorgen, muss die Greifeinheit 30 den kürzesten Weg in X-Richtung zurücklegen. Die mittlere Fördertechnik 32-3 erfordert eine Bewegung der Greifeinheit 30 in einem mittleren Bereich in X-Richtung.

Die Fördertechniken 32-1 bis 32-3 sind hier angetrieben, um die Artikel in der Fig. 7 von links nach rechts in Richtung der Auftragsbehälter 34 bewegen zu können. Es versteht sich, dass hier ebenfalls Schwerkraftbahnen eingesetzt werden können, um auf einen Antrieb verzichten zu können. Die sekundären Fördertechniken 32 können des Weiteren in der Horizontalen mit einem Winkel zueinander angeordnet werden, wie es in der Fig. 5 bereits für die Schwerkraftförderer 78 gezeigt ist. Die zweiten Fördertechniken 32 der Fig. 7 können alternativ auch in größerer Anzahl parallel nebeneinander angeordnet werden, wie es in Fig. 6 gezeigt ist.

Es versteht sich, dass die in den Figuren gezeigten Varianten der Anordnung der zweiten Fördertechniken 32 beliebig miteinander kombiniert werden können.

Bezug nehmend auf Fig. 8 ist ein Tablar 72 gezeigt, wie es eingesetzt wird, um das vollständige Artikelspektrum bei der Greifeinheit 30 in einer Stunde präsentieren zu können, wie es bereits oben ausgeführt wurde.

Das Tablar 72 weist eine umlaufende Umrandung 90 auf. Im Innenraum des Tablars 72 können in Längsrichtung Fachunterteilungen 92 vorgesehen sein, um beispielsweise vier Tablarreihen zu definieren. In der Fig. 8 ist die linke Tablarreihe vollständig mit Artikeln 52 bestückt. Die daran anschließende Tablarreihe 94 weist lediglich einen Artikel 52' auf. Die zweite Tablarreihe von rechts ist selbst wiederum in eine Vielzahl von Tablareinzelfächern 98 mit Hilfe von weiteren Fachunterteilungen 96 unterteilt. Einige dieser Tablareinzelfächer 98 sind mit Artikeln 52" bestückt. Die in der Fig. 8 rechts dargestellte Tablarreihe 94' ist leer.

Bezug nehmend auf Fig. 9 wird erläutert werden, wie man ohne Bilderkennungseinheit 38 (im Gegensatz zu den Fig. 1 und 4) trotzdem sicher und zuverlässig Artikel von der ersten Fördertechnik 18 mittels der Greifeinheit 30 greifen kann.

Dazu werden auf der ersten Fördertechnik 18 in der Steuereinheit imaginäre Fenster 100 definiert. Die imaginären Fenster 100 werden durch imaginäre Felder 102 gebildet, die wiederum durch imaginäre Rasterpunkte 104 in ihren Ecken begrenzt sind. Die Artikel 52 werden vorzugsweise einzeln auf entsprechend ausgebildete Artikeltablare 106, 108 gesetzt. Die Grundfläche der Artikeltablare 106, 108 entspricht dabei vorzugsweise im Wesentlichen der Grundfläche der verschiedenen Artikeltypen 52, 52'. In der Fig. 8 sind ein Quader 52 und zwei Würfel 52' auf jeweils einem eigenen Tablar 106 bzw. 108 vorgesehen. Die Tablare 106, 108 werden an den Rasterpunkten 104 ausgerichtet und auf die Rasterfelder 102 gesetzt. Dieser Vorgang geschieht beispielsweise im Bereich des Wareneingangs 12 und/oder des Lagers 16. Für diesen Zweck vorgesehene Beladevorrichtungen werden von der übergeordneten Steuereinheit 69 derart angesteuert, dass die Tablare 106, 108 auf die dafür vorgesehenen Rasterfelder gesetzt werden.

Die Greifeinheit 30 verfügt somit über absolute Positionsdaten der Artikel 52, 52' relativ zur ersten Fördertechnik 18. Da die Artikel 52, 52' jeweils auf einem eigenen Ladehilfsmittel 106, 108 stehen, ist es für den Greifer 46, der in diesem Fall in Form von mechanischen Zangen ausgebildet ist, unerheblich, welcher Artikeltyp tatsächlich auf dem Ladehilfsmittel 106, 108 gelagert ist. Eine Trennung der Artikel 52, 52' von den Ladehilfsmitteln 106, 108 erfolgt erst zu einem späteren Zeitpunkt.

Auf diese Weise ist es möglich, sich die Bilderkennungseinheit 38 und den damit verbundenen Rechenaufwand zu sparen. Es versteht sich, dass man die Artikelladehilfsmittel ggf. auch weglassen kann.

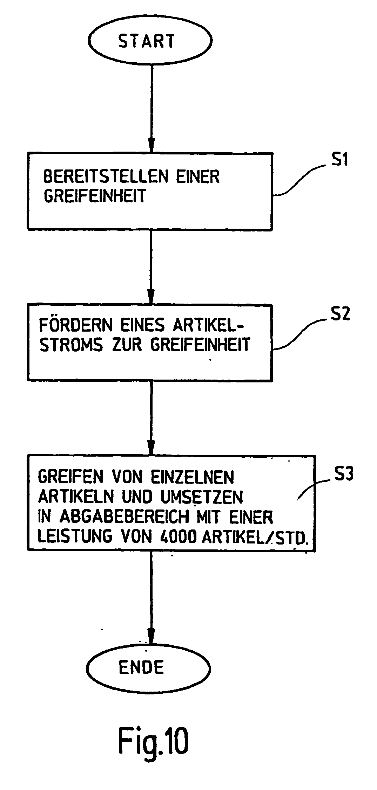

Bezug nehmend auf Fig. 10 ist ein Flussdiagramm eines Verfahrens gezeigt.

In einem ersten Schritt S1 wird eine Greifeinheit 30 bereitgestellt. In einem zweiten Schritt S2 wird ein Artikelstrom zur Greifeinheit 30 über die erste Fördertechnik 18 befördert. In einem dritten Schritt S3 greift die Greifeinheit 30 einzelne vorbestimmte Artikel aus dem Strom und setzt diese in den Abgabebereich um, wobei die Greifeinheit mit einer Leistung bis zu 1500 Artikel pro Stunde oder sogar bis zu 4000 Artikel pro Stunde arbeitet.

Ferner versteht es sich, dass die vorliegende Erfindung auch zum Handhaben von Retourwaren eingesetzt werden kann. Retourwaren sind Artikelsendungen die von Auftraggeber wieder zurückgeschickt werden und dann ins Lager rückgelagert werden müssen. Retourenwarensendungen zeichnen sich dadurch aus, dass viele unterschiedliche Artikel in meist geringen Stückzahlen enthalten sind. Die Artikel der Retourwarensendung können auf die erste Fördertechnik gegeben werden und als Gruppe zu einer Greifeinheit gefördert werden. Eine stromabwärts zur Greifeinheit gelegene Bilderkennungseinheit erfasst ein Bild. Mit entsprechenden Konturauflösungsalgorithmen lassen sich die Positionen und Orientierungen der einzelnen Artikel auflösen. Daraus werden wiederum Steuerdaten für die Greifeinheit erzeugt, die es ermöglichen, selbst während eines kontinuierlichen Förderbetriebs der ersten Fördertechnik die Artikel sicher und zuverlässig zu greifen. Sollen die Artikel in Form von Stapeln auf der ersten Fördertechnik vorliegen, können Abstreifer eingesetzt werden, um die Stapel aufzulösen und somit eine einzige Lage von Artikeln zu erzeugen. Als Abstreifer können bürstenähnliche Vorrichtungen eingesetzt werden, die horizontal in mitunter unterschiedlichen Höhen quer über der ersten Fördertechnik angeordnet sind. Es versteht sich, dass derartige stapelauflösende Vorrichtungen natürlich auch beim Kommissionieren von normalen Artikeln eingesetzt werden können, insbesondere wenn die Greifeinheit direkt von der ersten Fördertechnik, und somit nicht aus Ladehilfsmitteln greift.

Nach einem erfolgten Umsetzten von Retourartikeln auf eine zweite Fördertechnik können diese Artikel an speziellen Artikelidentifikationsvorrichtungen vorbeigeführt werden, um hinsichtlich des Artikeltyps identifiziert zu werden. Identifizierte Artikel können zwischengespeichert werden, bis der übergeordnete Rechner den richtigen Lagerbehälter herangeholt hat, um den zwischengespeicherten Artikel dann in einen Behälter rückzulagern, der seinem Artikeltyp zugeordnet ist.

Es versteht sich, dass in der vorstehenden Beschreibung die Behälter jederzeit gegen ein anderes Ladehilfsmittel, wie z.B. ein Tablar, etc., ausgetauscht werden kann, ohne vom Erfindungsgedanken abzuweichen. Das gleiche gilt für die Fördertechnik. Es wurde vorwiegend der Einsatz von Gurtbänder beschrieben. Der Einsatz anderer Typen, wie z.B. Rollenbahnen, Kettenförderern, etc, ist genau so gut möglich.

## Patentansprüche

1. Lager- und Kommissioniersystem (10; 10') zum vollautomatisierten Kommissionieren von einer Vielzahl von verschiedenen Artikeln (52, 52', 52"), die in Lagerladehilfsmitteln (70, 72) bevorratet sind, in Auftragsladehilfsmittel (34) gemäß einem Kommissionierauftrag, mit:
einem Artikellager;
einer ersten Fördertechnik (18), die eine Vielzahl der verschiedenen sich kontinuierlich fortbewegenden, zu kommissionierenden Artikel (52) aus einem Artikellager (16) in den Lagerladehilfsmitteln (70, 72) in Form eines Artikelstroms stromabwärts zu einem mannlos arbeitenden Kommissionierplatz (37) mit zumindest einer vollautomatischen Greifeinheit (30) hin befördert, wobei die erste Fördertechnik (18) bis zu 1800 Lagerladehilfsmittel pro Stunde durch einen Greifbereich (56) führen kann und wobei die Lagerladehilfsmittel (70, 72, 106, 108) sortenrein und/oder fachunterteilt sortenrein mit Artikeln (52, 52', 52") bestückt sind;
zumindest der einen, insbesondere deckengelagerten, heb- und senkbaren Greifeinheit (30) zum Greifen eines, insbesondere eines einzigen, beliebigen Artikels (52) aus dem sich kontinuierlich fortbewegenden Strom an einem Aufnahmepunkt (62) innerhalb des Greifbereichs (56) auf der ersten Fördertechnik (18) und zum Umsetzen des gegriffenen Artikels (52) an einen Abgabepunkt (60) außerhalb des Greifbereichs (56), wobei der Aufnahmepunkt (62) und der Abgabepunkt (60) innerhalb eines, vorzugsweise nahezu kreisrunden, Arbeitsbereichs (54) der Greifeinheit (30) liegen und wobei beim Umsetzen der beliebige Artikel (52) aus dem Strom vertikal angehoben, im Wesentlichen horizontal versetzt und danach vertikal nach unten bewegt wird, wobei die Greifeinheit (30) bis zu 1500 Artikel pro Stunde greifen und umsetzen kann;
einer Steuereinheit (31; 69), die Greif- und Umsetzbewegungen der Greifeinheit (30) so koordiniert, dass vorbestimmte Artikel (52) des sich kontinuierlich fortbewegenden Stroms einzeln gegriffen und umgesetzt werden;
einem Auftragsladehilfsmittelpuffer (35; 35') zum Zwischenspeichern von einem oder mehreren Auftragsladehilfsmitteln (34) an einer entsprechenden Anzahl von Zielstellen, wobei der Puffer (35) an die Greifeinheit (30) gekoppelt ist;
einer Auftragsladehilfsmittel-Fördertechnik (36) zum An- und Abtransport von Auftragsladehilfsmitteln (34) zum und vom Auftragsladehilfsmittelpuffer (50; 35'),
einer Bilderkennungseinheit (38) zum Erfassen und Auswerten eines Orts und einer Orientierung eines jeden Artikels (52) in dem sich kontinuierlich fortbewegenden Strom auf der ersten Fördertechnik (18), wobei die Bilderkennungseinheit (38) stromaufwärts relativ zur Greifeinheit (30) angeordnet ist und eingerichtet ist, selbst chaotisch orientierte Artikel (52, 52', 52") innerhalb des Stroms aufzulösen, und insbesondere zu identifizieren; und
eine zweite Fördertechnik (32), die im Arbeitsbereich (54) der Greifeinheit (30) schräg, vorzugsweise senkrecht, an die erste Fördertechnik (18) koppelt und die mit dem Auftragsladehilfsmittelpuffer (35), insbesondere mit den Zielstellen, verbunden ist.

2. Lager- und Kommissioniersystem nach Anspruch 1, wobei jeder Artikel (52) auf einem eigenen Artikelladehilfsmittel (106, 108) an einer jeweils fest vorgegebenen Position (102) auf der ersten Förderstrecke (18) in den Greifbereich (56) hingefördert und dort samt dem Artikelladehilfsmittel (106,108) gegriffen und umgesetzt wird.

3. Lager- und Kommissioniersystem nach einem der Ansprüche 1 oder 2, wobei die Greifeinheit (30) Artikel (52, 52', 52") mit einem jeweiligen Gesamtgewicht von bis zu 2 kg mit Beschleunigungen von bis zu 150 m/s² umsetzen kann.

4. Lager- und Kommissioniersystem nach einem der Ansprüche 1 bis 3, wobei der Arbeitsbereich (54) einen Durchmesser von bis zu 1500 mm bei einem Hub von vorzugsweise bis zu 60 mm hat.

5. Lager- und Kommissioniersystem nach Anspruch 1, wobei die zweite Fördertechnik (32) eine Vielzahl von angetriebenen Stauförderern (80) und/oder Schwerkraftbahnen (78) umfasst, von denen jeder bzw. jede in einer Zielstelle (81) endet.

6. Lager- und Kommissioniersystem nach Anspruch 1 oder 5, wobei die zweite Fördertechnik (32; 32-1, 32-2, 32-3) mit der ersten Fördertechnik (18) auf einer Höhe und/oder darunter angeordnet ist.

7. Lager- und Kommissioniersystem nach einem der vorhergehenden Ansprüche, wobei die Steuereinheit (31; 69) eine Fördergeschwindigkeit der ersten Fördertechnik (18) in Abhängigkeit von einer Partikeldichte auf der ersten Fördertechnik (18) regelt.

8. Lager- und Kommissioniersystem nach einem der vorhergehenden Ansprüche, das ferner einen Wareneingang (12) und/oder einen Versandbereich (14) aufweist, die vorzugsweise durch die erste Fördertechnik (18), insbesondere in Form eines Fördertechnikkreisels (19), an die Greifeinheit (30) gekoppelt sind.

9. Lager- und Kommissioniersystem nach einem der vorhergehenden Ansprüche, wobei die Auftragsladehilfsmittel-Fördertechnik (36) im Arbeitsbereich (54) der Greifeinheit (30) unter der ersten Fördertechnik (18) hindurch geführt ist und/oder die Zielstellen (81) mit einem Versandbereich (14) verbindet.

10. Lager- und Kommissioniersystem nach einem der vorhergehenden Ansprüche, wobei die Steuereinheit (31; 69) angepasst ist, Aufnahmepunkte (62) während eines kontinuierlichen Förderbetriebs der ersten Fördertechnik (18) derart zu verfolgen, dass die Greifeinheit (30) Artikel (52) von der ersten Fördertechnik (18) greifen kann, ohne dass die erste Fördertechnik (18) angehalten wird.

## Claims

1. A storage and picking system (10; 10') for picking a plurality of different articles in a fully automated manner, which are stored in storage load supports (70, 72), into order load supports (34) in accordance with a picking order, comprising:
an article warehouse;
a first conveyor (18) conveying a plurality of the different articles (52), which are to be picked and move continuously, from the article warehouse (16) in said storage load supports as an article stream downstream relative to a manlessly operated order-picking station (37) including at least one fully automated gripping unit (30), wherein the first conveyor (18) can convey up to 1,800 storage load supports each hour through a gripping area (56), wherein the storage load supports (70, 72, 106, 108) are loaded with articles of one sort only and/or are loaded in a compartment-divided manner with articles (52, 52', 52") of one sort only;
the at least one gripping unit (30), which can be lifted and lowered and which is particularly mounted to a ceiling, for gripping one, in particular one single, arbitrary article (52) from the continuously moving stream at a receiving point (62) within the gripping area (56) on the first conveyor (18), and for transferring the gripped article (52) to a delivery point (60) outside the gripping area (56), wherein the receiving point (62) and the delivery point (60) are located within a working area (54) of the gripping unit (30), which preferably is almost circular, and wherein the arbitrary article (52) is vertically lifted from the stream, substantially displaced in a horizontal direction, and subsequently moved vertically downwards during the transfer, wherein the gripping unit (30) can grip and transfer up to 1,500 articles each hour;
a control unit (31; 69) coordinating the gripping and transferring movements of the gripping unit (30) such that predetermined articles (52) of the continuously moving stream can be gripped and transferred individually; and
an order load support buffer (35; 35') for buffering one or more of the order load supports (34) at a corresponding number of destinations, wherein the buffer (35) is coupled to the gripping unit (30);
an order load support conveyor (36) for delivering and transporting away the order load supports (34) to and from the order load support buffer (35; 35');
an image recognition unit (38) for detecting and evaluating a location and an orientation of each of the articles (52) in the continuously moving stream on the first conveyor (18), wherein the image recognition unit (38) is arranged upstream relative to the gripping unit (30) and is adapted to resolve articles (52, 52', 52") within the stream, even if they are chaotically orientated, and to particularly identify the same;
a second conveyor (32) which couples in the working area (54) of the gripping unit (30) obliquely, preferably perpendicular, to the first conveyor (18) and is connected to the order load support buffer (35), in particular to the destinations.

2. The storage and picking system of claim 1, wherein each of the articles (52) is conveyed on its own article load support (106, 108) at a respectively fixedly determined position (102) on the first conveyor (18) into the gripping area (56), and there is gripped and transferred together with the article load support (106, 108).

3. The storage and picking system of any of the claims 1 or 2, wherein the gripping unit (30) can transfer articles (52, 52', 52") respectively having a total weight of up to 2 kg at accelerations of up to 150 m/s².

4. The storage and picking system of any of the claims 1 to 3, wherein the working area (54) has a diameter of up to 1,500 mm when the lift preferably is up to 60 mm.

5. The storage and picking system of claim 1, wherein the second conveyor (32) comprises a plurality of driven accumulation conveyors (80) and/or gravity conveyors (78) each of which ends at one of the destinations (81).

6. The storage and picking system of claim 1 or 5, wherein the second conveyor (32; 32-1, 32-2, 32-3) is arranged together with the first conveyor (18) on the same height and/or beneath.

7. The storage and picking system of any of the preceding claims, wherein the control unit (31; 69) regulates a conveyor velocity of the first conveyor (18) in dependence on an article density on the first conveyor (18).

8. The storage and picking system of any of the preceding claims, further comprising a goods receipt (12) and/or a shipping area (14), which couple to the gripping unit (30) preferably via the first conveyor (18), in particular by means of a circular conveyor system (19).

9. The storage and picking system of any of the preceding claims, further comprising an order load support conveyor (36), which runs in the working area (54) of the gripping unit (30) beneath the first conveyor (18) and/or connects the destinations (81) to the shipping area (14).

10. The storage and picking system of any of the preceding claims, wherein the control unit (31; 69) is adapted to track receiving points (62) while the first conveyor (18) is continuously operated, such that the gripping unit (30) can grip articles (52) from the first conveyor (18) without stopping the first conveyor (18).

## Revendications

1. Système de stockage et de préparation (10; 10') pour la préparation entièrement automatisée d'une multiplicité d'articles différents (52, 52', 52"), qui sont fournis dans des contenants de stockage (70, 72), dans des contenants de commandes (34), selon une commande de préparation, avec:
- un stock d'articles;
- un premier mécanisme de transport (18), qui transporte une multiplicité d'articles différents (52) à préparer et se déplaçant en continu à partir d'un stock d'articles (16) dans les contenants de stockage (70, 72) sous la forme d'un flux d'articles vers l'aval vers un lieu de préparation opérant sans personnel (37) avec au moins une unité de prise entièrement automatisée (30), dans lequel le premier mécanisme de transport (18) peut conduire jusqu'à 1800 contenants de stockage par heure à travers une zone de prise (56) et dans lequel les contenants de stockage (70, 72, 106, 108) sont chargés par type et/ou par type avec répartition en casiers avec des articles (52, 52', 52");
- au moins la première unité de prise (30), en particulier installée au plafond, pouvant monter et descendre, pour prendre un article (52), en particulier un article individuel quelconque, hors du flux en mouvement continu en un point de prélèvement (62) à l'intérieur de la zone de prise (56) sur le premier mécanisme de transport (18) et pour transférer l'article prélevé (52) à un point de remise (60) à l'extérieur de la zone de prise (56), dans lequel le point de prélèvement (62) et le point de remise (60) sont situés à l'intérieur d'une zone de travail (54), de préférence pratiquement circulaire, de l'unité de prise (30) et dans lequel, lors du transfert, l'article quelconque (52) est soulevé verticalement hors du flux, est déplacé sensiblement à l'horizontale et est ensuite déplacé verticalement vers le bas, dans lequel l'unité de prise (30) peut prendre et transférer jusqu'à 1500 articles par heure;
- une unité de commande (31; 69), qui coordonne les mouvements de prise et de transfert de l'unité de prise (30) de telle manière que des articles prédéterminés (52) du flux en mouvement continu soient prélevés et transférés individuellement;
- une zone tampon de contenants de commandes (35; 35') pour le stockage intermédiaire d'un ou de plusieurs contenants de commandes (34) en un nombre correspondant de points cibles, la zone tampon (35) étant couplée à l'unité de prise (30);
- un mécanisme de transport de contenants de commandes (36) pour l'amenée et l'évacuation de contenants de commandes (34) vers et à partir de la zone tampon de contenants de commandes (50; 35');
- une unité de reconnaissance d'image (38) pour détecter et évaluer un emplacement et une orientation de chaque article (52) dans le flux en mouvement continu sur le premier mécanisme de transport (18), dans lequel l'unité de reconnaissance d'image (38) est disposée en amont par rapport à l'unité de prise (30) et est conçue pour distinguer elle-même des articles à orientation chaotique (52, 52', 52") à l'intérieur du flux, et en particulier pour les identifier; et
- un deuxième mécanisme de transport (32), qui est couplé en oblique, de préférence perpendiculairement, au premier mécanisme de transport (18) dans la zone de travail (54) de l'unité de prise (30), et qui est relié à la zone tampon de contenants de commandes (35), en particulier aux points cibles.

2. Système de stockage et de préparation selon la revendication 1, dans lequel chaque article (52) est transporté sur un contenant d'article propre (106, 108) à une position chaque fois bien prédéterminée (102) sur la première section de transport (18) dans la zone de prise (56) et y est prélevé et transféré avec son contenant d'article (106, 108).

3. Système de stockage et de préparation selon l'une quelconque des revendications 1 ou 2, dans lequel l'unité de prise (30) peut transférer des articles (52, 52', 52") d'un poids total respectif jusqu'à 2 kg avec des accélérations pouvant atteindre 150 m/s².

4. Système de stockage et de préparation selon l'une quelconque des revendications 1 à 3, dans lequel la zone de travail (54) présente un diamètre pouvant atteindre 1500 mm avec une levée de préférence jusqu'à 60 mm.

5. Système de stockage et de préparation selon la revendication 1, dans lequel le deuxième mécanisme de transport (32) comprend une multiplicité de transporteurs d'accumulation entraînés (80) et/ou de chemins de déplacement par gravité (78), dont chacun se termine en un point cible.

6. Système de stockage et de préparation selon la revendication 1 ou 5, dans lequel le deuxième mécanisme de transport (32; 32-1; 32-2; 32-3) est disposé à la hauteur du premier mécanisme de transport (18) et/ou en dessous de celui-ci.

7. Système de stockage et de préparation selon l'une quelconque des revendications précédentes, dans lequel l'unité de commande (31; 69) règle une vitesse de transport du premier mécanisme de transport (18) en fonction d'une densité d'articles sur le premier mécanisme de transport (18).

8. Système de stockage et de préparation selon l'une quelconque des revendications précédentes, qui comporte en outre une entrée de marchandises (12) et/ou une zone d'expédition (14), qui sont couplées à l'unité de prise (30) de préférence par le premier mécanisme de transport (18), en particulier sous la forme d'un carrefour des mécanismes de transport (19).

9. Système de stockage et de préparation selon l'une quelconque des revendications précédentes, dans lequel le mécanisme de transport de contenants de commandes (36) est conduit à travers la zone de travail (54) de l'unité de prise (30) sous le premier mécanisme de transport (18) et/ou relie les points cibles (81) à une zone d'expédition (14).

10. Système de stockage et de préparation selon l'une quelconque des revendications précédentes, dans lequel l'unité de commande (31; 69) est adaptée pour suivre des points de prélèvement (62) pendant une opération de transport continue du premier mécanisme de transport (18) de telle manière que l'unité de prise (30) puisse prélever des articles (52) du premier mécanisme de transport (18), sans que le premier mécanisme de transport (18) soit mis à l'arrêt.
